# EUROPEAN PATENT APPLICATION

(11) **EP 3 845 821 A1**
(43) Date of publication of application: **07.07.2021**
(21) Application number: 20195676.0
(22) Date of filing: 11.09.2020
(51) Int. Cl.: F24F 8/192, F24F 8/30, F24F 8/80, F24F 13/20

(54) **AIR-CONDITIONING AND AIR-CLEANING EQUIPMENT**

(30) Priority: 31.12.2019 KR 20190178786
(71) Applicant: Solasidokorea Co., Ltd., Jeollabuk-do 54853 (KR)
(72) Inventor: YOON, Changbok, 54942 Jeonju-si, Jeollabuk-do (KR)
(74) Representative: Viering, Jentschura & Partner mbB Patent- und Rechtsanwälte

(57) **Abstract**

Proposed is air-conditioning and air-cleaning equipment including: a first air conditioning housing configured to draw in outside air and the inside air of the building to form mixed air; a second air conditioning housing configured to receive the mixed air from the first air conditioning housing and to stagnate the mixed air in the second air conditioning housing; a third air conditioning housing configured to receive a part of the mixed air from the second air conditioning housing; a fourth air conditioning housing configured to receive partial mixed air from the third air conditioning housing and to purify the partial mixed air to form clean air; and a fifth air conditioning housing configured to receive the clean air from the fourth air conditioning housing and to expel the clean air into the interior of the building.

## Description

### CROSS REFERENCE TO RELATED APPLICATION

The present application claims priority to Korean Patent Application No. 10-2019-0178786, filed December 31, 2019, the entire contents of which is incorporated herein for all purposes by this reference.

### BACKGROUND OF THE INVENTION

### Field of the Invention

The present invention relates to air-conditioning and air-cleaning equipment installed in an interior of a building to purify inside air of the building.

### Description of the Related Art

In general, air cleaners are installed inside buildings to draw in inside air of the building and remove pollutants from the inside air, thereby generating clean air and expelling the clean air into the interior of the buildings. Here, such air cleaners often include a pre-filter to remove pollutants from the inside air, and a high-efficiency particulate air (HEPA) filter in mechanical filter-types or an electric dust collection filter in electric dust collection types, and a deodorization filter.

However, the inside air of the buildings has a high carbon content, high odor concentration, or a high frequency of occurrence of specific pollutants depending on the internal use of the buildings, which leads to limiting the pollutant removal function of the air cleaner. In addition, in the air cleaners, because of the fiber network of the HEPA filter, the HEPA filter exhibits a filter function that gradually deteriorates under exposure to high humidity conditions depending on the absorption rate of moisture.

The electric dust collection filter cannot control the supply voltage of a high voltage generator, leading to generation of ozone harmful to the human body. Moreover, the air cleaners have a complex internal structure because additional elements are added in the vicinity of the HEPA filter or the electric dust collection filter in order to improve the function of removing pollutants by the HEPA filter or the electric dust collection filter. Meanwhile, an example of the air cleaners is disclosed in Korean Utility Model Registration No. 20-0410245 as the related art.

The foregoing is intended merely to aid in the understanding of the background of the present invention, and is not intended to mean that the present invention falls within the purview of the related art that is already known to those skilled in the art.

### SUMMARY OF THE INVENTION

Accordingly, the present invention has been made keeping in mind the above problems occurring in the related art, and an objective of the present invention is to provide an air-conditioning and air-cleaning equipment, which increases the degree of freedom to draw in air before generation of clean air by being installed in an interior of a building, maintains a filter function uniformly throughout service life, minimizes ozone generation upon generation of the clean air, and has a simple internal structure.

In order to achieve the above objective, according to one aspect of the present invention, there is provided air-conditioning and air-cleaning equipment installed in an interior of a building and configured to purify inside air of the building, the air-conditioning and air-cleaning equipment including: a first air conditioning housing configured to draw in outside air and the inside air of the building to form mixed air; a second air conditioning housing positioned in the vicinity of a first end of the first air conditioning housing and configured to receive the mixed air from the first air conditioning housing and to stagnate the mixed air in the second air conditioning housing; a third air conditioning housing configured to receive a part of the mixed air from the second air conditioning housing; a fourth air conditioning housing configured to receive partial mixed air from the third air conditioning housing and to purify the partial mixed air to form clean air; and a fifth air conditioning housing positioned in the vicinity of a second end of the first air conditioning housing and configured to receive the clean air from the fourth air conditioning housing and to expel the clean air into the interior of the building, wherein the first to the fifth air conditioning housings may be in contact with each other through partition walls to define one air conditioning housing, and the fourth air conditioning housing may ionize pollutants in the partial mixed air by means of electricity and collect the pollutants by means of the electricity.

The first air conditioning housing may draw in the outside air from an outside air inlet pipe exposed to outside of the building by connecting a first air inlet of the first air conditioning housing to the outside air inlet pipe, and draw in the inside air from a second air inlet of the first air conditioning housing exposed to the interior of the building, wherein the first air inlet of the first air conditioning housing may be configured as a tube protruding from a first wall of the first air conditioning housing, and the second air inlet of the first air conditioning housing may be covered with an air filtering wall wire mesh positioned on a second wall of the first air conditioning housing.

The first air conditioning housing may draw in the outside air from outside of the building and the inside air from the interior of the building to form the mixed air consisting of the outside air and the inside air, measure an air temperature of the mixed air and an inner temperature of the building through a temperature sensor positioned at the first air conditioning housing, and adjust the air temperature of the mixed air to the inner temperature of the building through a heater positioned at the first air conditioning housing.

The second air conditioning housing may communicate with the first air conditioning housing through an air flow guide hole positioned on a partition wall where the first air conditioning housing and the second air conditioning housing face each other, receive the mixed air from the first air conditioning housing and confine the mixed air inside the second air conditioning housing, and measure temperature, humidity, bacteria, and odors of the interior of the building through an air sensor positioned on a partition wall of the second air conditioning housing.

The third air conditioning housing may intermittently communicate with the second air conditioning housing through an air flow opening/closing unit positioned on a partition wall where the second air conditioning housing and the third air conditioning housing face each other, and in response to electric signals for temperature, humidity, bacteria and odors of the interior of the building from the air sensor of the second air conditioning housing, the air flow unit may open an air flow path to allow the part of the mixed air to flow or closes the air flow path to maintain airtightness with respect to the second air conditioning housing; and the air flow opening/closing unit may include: a solenoid valve opening and closing the air flow path in response to an electric signal from the air sensor; and a suction fan electrically connected to the solenoid valve.

The fourth air conditioning housing may include: a plurality of air purifiers facing the air flow opening/closing unit of the third air conditioning housing, wherein each of the air purifiers may be configured such that a pre-filter, an air pollutant collector, a high voltage generator, an air fan, and a post filter arranged in aligned relation in a direction from the third air conditioning housing toward the fifth air conditioning housing are included in a protective casing, and the plurality of air purifiers may disperse the partial mixed air from the air flow opening/closing unit to form the clean air.

The pre-filter may include an air filtering container wire mesh configured to filter out pollutants passed through an air filtering wall wire mesh of the first air conditioning housing, and the air filtering container wire mesh may have a smaller mesh size than the air filtering wall wire mesh.

The air pollutant collector may be electrically connected to the high voltage generator, and may include: a discharger electrically charged with negative (-) charges upon application of electric power from the high voltage generator; and a dust collector electrically charged with positive (+) charges upon application of electric power from the high voltage generator, wherein the discharger may electrically charge pollutants contained in the dispersed partial mixed air with negative charges while burning the pollutants with arc flashes by bringing the arc flashes into contact with the pollutants and scatter the pollutants around the discharger, and the dust collector may draw pollutants charged with negative charges from the dispersed partial mixed air by means of an electrostatic attraction force.

The discharger may include: a cylindrical insulation tube having a spiral groove formed on an outer circumferential surface thereof; and a toothed conductive strip positioned along the spiral groove of the insulation tube and having a plurality of teeth protruding from the outer circumferential surface of the insulation tube, wherein the toothed conductive strip may be electrically charged with the negative (-) charges upon application of electric power from the high voltage generator.

The insulation tube of the discharger may have a uniform diameter, turns of the toothed conductive strip may be, when viewed from the outer circumferential surface of the insulation tube, formed in a uniform size on the insulation tube, and on the spiral groove of the insulation tube, the neighboring turns of the toothed conductive strip may have teeth arranged in directly opposed relationship or teeth arranged in diagonally opposed relationship.

The insulation tube of the discharger may have a dumbbell shape of which a diameter is relatively smaller in a first cylindrical portion than in a second cylindrical portion, turns of the toothed conductive strip may be, when viewed from the outer circumferential surface of the insulation tube, formed in a uniform size on the insulation tube, and on the spiral groove of the insulation tube, the neighboring turns of the toothed conductive strip may have teeth arranged in directly opposed relationship or teeth arranged in diagonally opposed relationship.

The dust collector may include: first to third dust collectors positioned under the toothed conductive strip of the discharger and sequentially increasing in diameter to have concentric circles around the insulation tube; and a fourth dust collector surrounding the toothed conductive strip and the insulation tube of the discharger, and the first to third dust collectors, wherein the first to fourth dust collectors may be electrically charged with the positive (+) charges upon application of electric power from the high voltage generator.

The first to third dust collectors may be made of a metal different from that of the fourth dust collector, and the first to the fourth dust collectors may be configured as corrugated tubes.

The high voltage generator may be electrically connected to the air pollutant collector and may apply a voltage to prevent generation of ozone from the dispersed partial mixed air to the air pollutant collector.

In operation of the air fan, the air fan may guide the dispersed partial mixed air flowing into the pre-filter in a direction from the pre-filter to the post filter, and the post filter may include active carbon configured to filter out pollutants passed through the air pollutant collector from the dispersed partial mixed air.

The fifth air conditioning housing may include a plurality of air outlets formed on a partition wall of the fifth air conditioning housing in the same number as the plurality of air purifiers positioned in the fourth air conditioning housing, and expel the clean air into the interior of the building through the air outlets and through air outlet pipes positioned in the interior of the building by connecting the air outlets to the air outlet pipes.

The fifth air conditioning housing may include a controller electrically connected to the temperature sensor of the first air conditioning housing, the air sensor of the second air conditioning housing, the air flow opening/closing unit of the third air conditioning housing, and the high voltage generator and the air fan of the fourth air conditioning housing, wherein the controller may be configured to control, under application of an external power source, driving of the heater in the first air conditioning housing in response to application of an electric signal from the temperature sensor, to control the driving of the solenoid valve and the suction fan of the air flow opening/closing unit in response to application of an electric signal from the air sensor, and to control the driving of the high voltage generator and the air fan in response to application of an electric signal from the air sensor.

The first air conditioning housing may have, when viewed from the bottom of the air conditioning housing, a higher height than the second to fifth air conditioning housings at a position on an upper side of the air conditioning housing, and include a fixed housing cover surrounding a second air inlet of the first air conditioning housing that is provided to allow the inside air of the building to be drawn therethrough, at the position on the upper side of the air conditioning housing, wherein an air filtering wall wire mesh may be hinged to the fixed housing cover through a hinge means and locked to a partition wall of the first air conditioning housing through a locking means.

Each of the second to fifth air conditioning housings may include an openable housing cover individually hinged to a partition wall of the first air conditioning housing through a hinge means at a position on the upper side of the air conditioning housing, wherein the openable housing cover may be covered on each of the second to fifth air conditioning housings through a locking means by being locked thereto at a position opposite to the first air conditioning housing, and the fourth air conditioning housing may be configured such that replacement of the plurality of air purifiers is allowed through the openable housing cover.

An advantage of the air-conditioning and air-cleaning equipment according to the present invention is that
since the equipment is composed of one air conditioning housing in the interior of the building to draw in the outside and inside air of the building to form the mixed air; the air purifier of the air conditioning housing generates an arc discharge between the metal discharger and the metal dust collectors of the air pollutant collector to ionize pollutants in the mixed air; a voltage that minimizes ozone generation from the mixed air is used upon generation of the arc discharge between the metal discharger and the metal dust collectors; and the clean air is expelled into the interior of the building from the air conditioning housing,
the equipment can increase the degree of freedom to draw in air before generation of the clean air by being installed in the interior of the building, maintain a filter function uniformly throughout service life, minimize ozone generation upon generation of the clean air, and have a simple internal structure in which the air purifier includes the pre-filter and the post filter in addition to the discharger and the dust collectors.

### BRIEF DESCRIPTION OF THE DRAWINGS

The above and other objectives, features, and other advantages of the present invention will be more clearly understood from the following detailed description when taken in conjunction with the accompanying drawings, in which:
FIG. 1 is a perspective view illustrating air-conditioning and air-cleaning equipment according to the present invention;
FIG. 2 is a schematic view illustrating the structure of an air conditioning housing in the air-conditioning and air-cleaning equipment illustrated in FIG. 1;
FIG. 3 is a perspective view illustrating the internal structure in detail by enlarging check point 'CP' in the air conditioning housing illustrated in FIG. 2;
FIG. 4 is a side view illustrating an air cleaner in the air conditioning housing illustrated in FIG. 2;
FIG. 5 is a partially cutout side view illustrating in detail the internal structure of the air cleaner illustrated in FIG. 4;
FIG. 6 is a schematic view illustrating a first modified example of a discharger illustrated in FIG. 5;
FIG. 7 is a schematic view illustrating a second modified example of the discharger illustrated in FIG. 5;
FIG. 8 is a block diagram illustrating an electrical connection relationship between a controller and components in the air conditioning housing illustrated FIG. 2; and
FIGS. 9 to 11 are schematic views illustrating a driving mechanism of the air-conditioning and air-cleaning equipment illustrated in FIG. 1.

### DETAILED DESCRIPTION OF THE INVENTION

Hereinbelow, exemplary embodiments of the present invention will be described in detail with reference to the accompanying drawings such that the invention can be easily embodied by one of ordinary skill in the art to which this invention belongs.

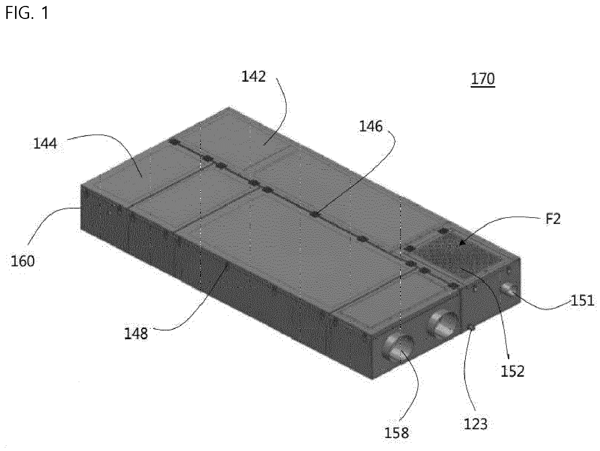

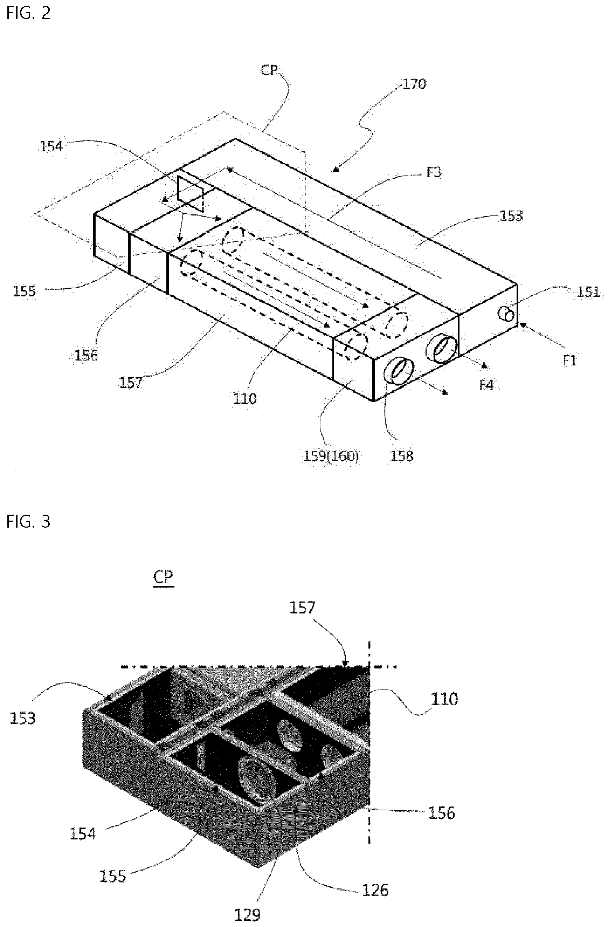

FIG. 1 is a perspective view illustrating air-conditioning and air-cleaning equipment according to the present invention, FIG. 2 is a schematic view illustrating the structure of an air conditioning housing in the air-conditioning and air-cleaning equipment illustrated in FIG. 1, and FIG. 3 is a perspective view illustrating the internal structure in detail by enlarging check point 'CP' in the air conditioning housing illustrated in FIG. 2.

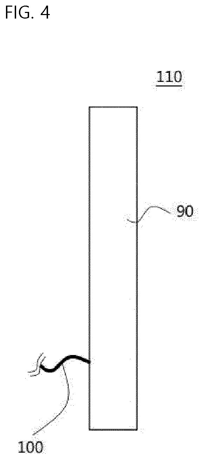

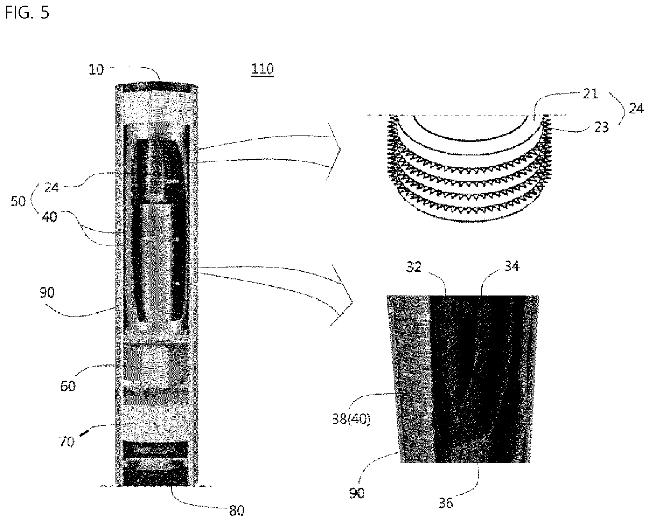

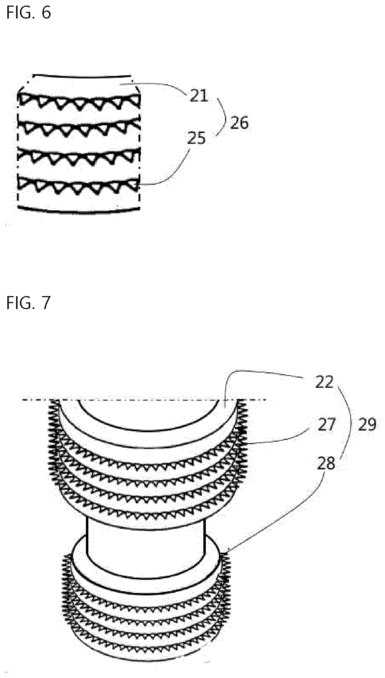

FIG. 4 is a side view illustrating an air cleaner in the air conditioning housing illustrated in FIG. 2, FIG. 5 is a partially cutout side view illustrating in detail the internal structure of the air cleaner illustrated in FIG. 4, and FIG. 6 is a schematic view illustrating a first modified example of a discharger illustrated in FIG. 5.

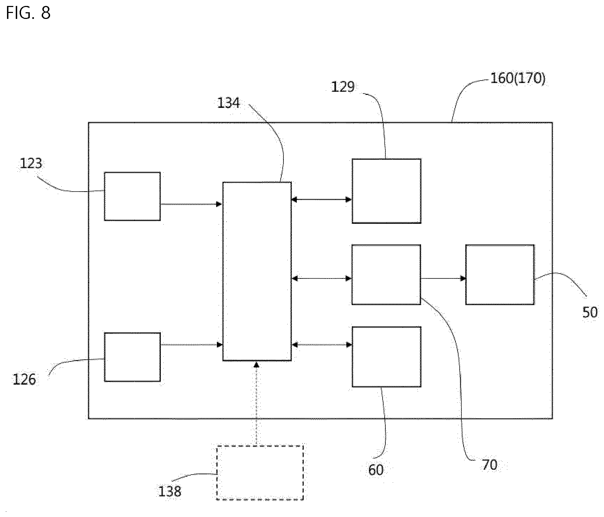

In addition, FIG. 7 is a schematic view illustrating a second modified example of the discharger illustrated in FIG. 5, and FIG. 8 is a block diagram illustrating an electrical connection relationship between a controller and components in the air conditioning housing illustrated FIG. 2.

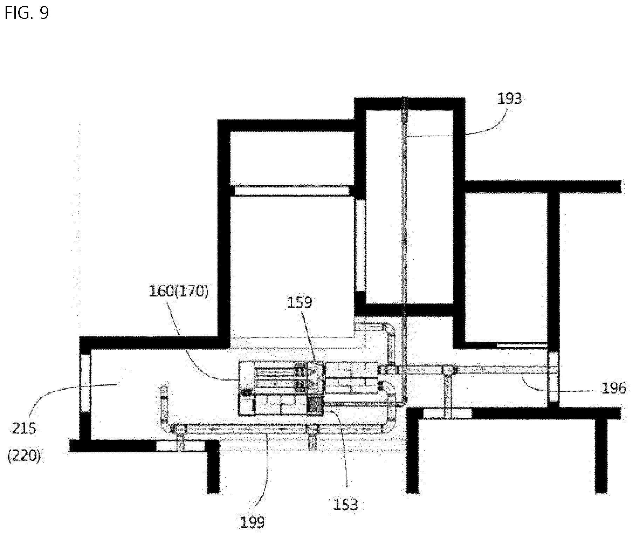

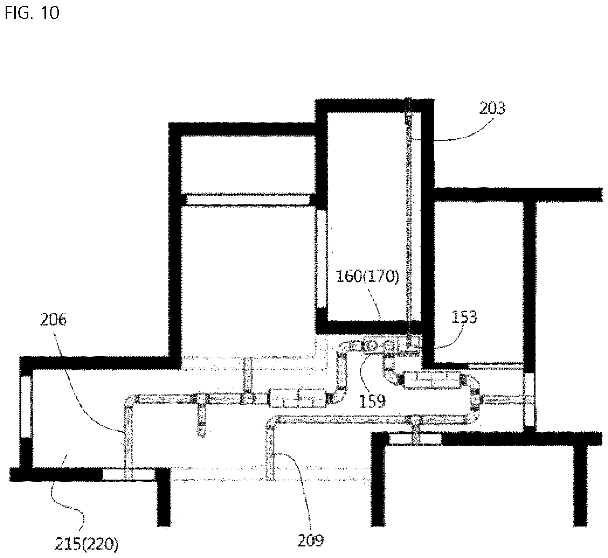

Referring to FIGS. 1 to 8, air-conditioning and air-cleaning equipment 170 according to a first embodiment of the present invention is installed in an interior 215 of a building 220 (illustrated in FIG. 9 or 10) and is configured to purify inside air of the building 220. To this end, the air-conditioning and air-cleaning equipment 170 includes first to fifth air conditioning housings 153, 155, 156, 157, and 159 as illustrated in FIG. 2.

Here, the first to fifth air conditioning housings 153, 155, 156, 157, and 159 are, when considering FIGS. 1, 2, and 3, in contact with each other through partition walls (not illustrated in the drawings) to define one air conditioning housing 160. First, briefly described, the first air conditioning housing 153 is configured to draw in outside and inside air of the building 220 to form mixed air.

The first air conditioning housing 153 draws in the outside air along a flow line F1 illustrated in FIG. 2 and draws in the inside air along a flow line F2 illustrated in FIG. 1. The second air conditioning housing 155 is positioned in the vicinity of a first end of the first air conditioning housing 153 as illustrated in FIG. 2 and is configured to receive the mixed air from the first air conditioning housing 153 along a flow line F3 illustrated in FIG. 2 and to stagnate the mixed air in the second air conditioning housing 155.

The third air conditioning housing 156 is configured to receive a part of the mixed air from the second air conditioning housing 155 along the flow line F3 illustrated in FIG. 2. The fourth air conditioning housing 157 is configured to receive partial mixed air from the third air conditioning housing 156 along the flow line F3 illustrated in FIG. 2 and to purify the partial mixed air to form clean air.

Here, the fourth air conditioning housing 157 ionizes pollutants in the partial mixed air by means of electricity and collects the pollutants by means of electricity. The fifth air conditioning housing 159 is positioned in the vicinity of a second end of the first air conditioning housing 153 as illustrated in FIG. 2 and is configured to receive the clean air from the fourth air conditioning housing 157 along the flow line F3 illustrated in FIG. 2 and to expel the clean air into the interior 215 of the building 220 along a flow line F4.

In more detail, the first air conditioning housing 153 draws in the outside air from an outside air inlet pipe 193 (illustrated in FIG. 9) or 203 (illustrated in FIG. 10) exposed to outside of the building 220 by connecting a first air inlet 151 of the first air conditioning housing 153 to the outside air inlet pipe 193 or 203, and draws in the inside air from a second air inlet 152 of the first air conditioning housing 153 exposed to the interior 215 of the building 220.

The first air inlet 151 of the first air conditioning housing 153 is configured as a tube protruding from a first wall of the first air conditioning housing 153 as illustrated in FIG. 1 or 2. The second air inlet 152 of the first air conditioning housing 153 is covered with an air filtering wall wire mesh positioned on a second wall of the first air conditioning housing 153 as illustrated in FIG. 1.

The first air conditioning housing 153 draws in the outside air from outside of the building 220 and the inside air from the interior 215 of the building 220 to form the mixed air consisting of the outside air and the inside air, measures the air temperature of the mixed air and the inner temperature of the building 220 through a temperature sensor 123 (illustrated in FIG. 1 or 8) positioned at the first air conditioning housing 153, and adjusts the air temperature of the mixed air to the inner temperature of the building 220 through a heater (not illustrated in the drawings) positioned at the first air conditioning housing 153.

The second air conditioning housing 155 communicates with the first air conditioning housing 153 through an air flow guide hole 154 (illustrated in FIG. 2 or 3) positioned on a partition wall where the first air conditioning housing 153 and the second air conditioning housing 155 face each other, receives the mixed air from the first air conditioning housing 153 along the flow line F3 and confines the mixed air inside the second air conditioning housing 155, and measures the temperature, humidity, bacteria, and odors of the interior 215 of the building 220 through an air sensor 126 (illustrated in FIG. 3 or 8) positioned on a partition wall of the second air conditioning housing 155.

The third air conditioning housing 156 intermittently communicates with the second air conditioning housing 155 through an air flow opening/closing unit 129 (illustrated in FIG. 3) positioned on a partition wall where the second air conditioning housing 155 and the third air conditioning housing 156 face each other, and in response to electric signals for temperature, humidity, bacteria and odors of the interior 215 of the building 220 from the air sensor 126 of the second air conditioning housing 155, the air flow unit 129 opens an air flow path (not illustrated in the drawings) to allow the part of the mixed air to flow or closes the air flow path to maintain airtightness with respect to the second air conditioning housing 155.

Here, the air flow opening/closing unit 129 includes a solenoid valve (not illustrated in the drawings) for opening and closing the air flow path in response to an electric signal from the air sensor 126, and a suction fan (not illustrated in the drawings) electrically connected to the solenoid valve. The fourth air conditioning housing 157 includes a plurality of air purifiers 110 facing the air flow opening/closing unit 129 of the third air conditioning housing 156 as illustrated in FIG. 2 or 3.

In addition, in the fourth air conditioning housing 157, as illustrated in FIG. 5, each of the air purifiers 110 is configured such that a pre-filter 10, an air pollutant collector 50, a high voltage generator 60, an air fan 70, and a post filter 80 arranged in aligned relation in the direction from the third air conditioning housing 156 toward the fifth air conditioning housing 159 are included in a protective casing 90, and the plurality of air purifiers 100 disperse the partial mixed air from the air flow opening/closing unit 129 to form the clean air.

The pre-filter 10 includes an air filtering container wire mesh configured to filter out pollutants passed through the air filtering wall wire mesh of the second air inlet 152 of the first air conditioning housing 153, and the air filtering container wire mesh has a smaller mesh size than the air filtering wall wire mesh of the second air inlet 152. The air pollutant collector 50 is electrically connected to the high voltage generator 60, and includes a discharger 24 electrically charged with negative (-) charges upon application of electric power from the high voltage generator 60 and a dust collector 40 electrically charged with positive (+) charges upon application of electric power from the high voltage generator 60.

The discharger 24 electrically charges pollutants contained in the dispersed partial mixed air with negative charges while burning the pollutants with arc flashes (not illustrated in the drawings) by bring the arc flashes into contact with the pollutants and scatters the pollutants around the discharger 24. The dust collector 40 draws pollutants charged with negative (-) charges from the dispersed partial mixed air by means of an electrostatic attraction force.

As illustrated in FIGS. 5 or 6, the discharger 24 or a discharger 26 according to a modified example respectively includes: a cylindrical insulation tube 21 having a spiral groove formed on an outer circumferential surface thereof; and a toothed conductive strip 23 or 25 positioned along the spiral groove of the insulation tube 21 and having a plurality of teeth protruding from the outer circumferential surface of the insulation tube 21. The toothed conductive strip 23 or 25 is electrically charged with negative (-) charges upon application of electric power from the high voltage generator 60.

The insulation tube 21 of the discharger 24 or 26 has a uniform diameter. Turns of the toothed conductive strip 23 or 25 are, when viewed from the outer circumferential surface of the insulation tube 21, formed in a uniform size on the insulation tube 21, and on the spiral groove of the insulation tube 21, the neighboring turns of the toothed conductive strip 23 or 25 have teeth arranged in directly opposed relationship as illustrated in FIG. 5 or teeth arranged in diagonally opposed relationship as illustrated in FIG. 6.

Unlike this, as illustrated in FIG. 7, in a discharge 29 according to another modified example, an insulation tube 22 has a dumbbell shape of which a diameter is relatively smaller in a first cylindrical portion than in a second cylindrical portion. Turns of each of toothed conductive strips 27 and 28 are, when viewed from an outer circumferential surface of the insulation tube 22, formed in different sizes on the respective first and second cylindrical portions, and on a spiral groove of the insulation tube 29, the neighboring turns of each of the toothed conductive strips 27 and 28 have teeth arranged in directly opposed relationship or teeth arranged in diagonally opposed relationship.

The dust collector 40, as illustrated in FIG. 5, includes: first to third dust collectors 32, 34, and 36 positioned under the toothed conductive strip 23 of the discharger 24 and sequentially increasing in diameter to have concentric circles around the insulation tube 21; and a fourth dust collector 38 surrounding the toothed conductive strip 23 and the insulation tube 21 of the discharger 24, and the first to third dust collectors 32, 34, and 36.

The first to fourth dust collectors 32, 34, 36, and 38 are electrically charged with positive (+) charges upon application of electric power from the high voltage generator 60. The first to third dust collectors 32, 34, and 36 are made of a metal different from that of the fourth dust collector 38. The first to fourth dust collectors 32, 34, 36, and 38 are configured as corrugated tubes.

The high voltage generator 60 is electrically connected to the air pollutant collector 50 and applies a voltage to prevent generation of ozone from the dispersed partial mixed air to the air pollutant collector 50. In operation of the air fan 70, the air fan 70 guides the dispersed partial mixed air flowing into the pre-filter 10 in the direction from the pre-filter 10 to the post filter 80. The post filter 80 includes active carbon configured to filter out pollutants passed through the air pollutant collector 50 from the dispersed partial mixed air.

The fifth air conditioning housing 159 includes a plurality of air outlets 158 (illustrated in FIG. 1 or 2) formed on a partition wall of the fifth air conditioning housing 159 in the same number as the plurality of air purifiers 110 positioned in the fourth air conditioning housing 157, and expels the clean air into the interior 215 of the building 220 through the air outlets 158 and air outlet pipes 196 and 199 (illustrated in FIG. 9) or 206 and 209 (illustrated in FIG. 10) positioned in the interior 215 of the building 220 by connecting the air outlets 158 to the air outlet pipes 196 and 199 (illustrated in FIG. 9) or 206 and 209 (illustrated in FIG. 10).

The fifth air conditioning housing 159 includes a controller 134 electrically connected to the temperature sensor 123 of the first air conditioning housing 153, the air sensor 126 of the second air conditioning housing 155, the air flow opening/closing unit 129 of the third air conditioning housing 156, and the high voltage generator 60 and the air fan 70 of the fourth air conditioning housing 157.

The controller 134 is configured to control, under application of an external power source 138, driving of the heater in the first air conditioning housing 153 in response to application of an electric signal from the temperature sensor 123, to control the driving of the solenoid valve and the suction fan of the air flow opening/closing unit 129 in response to application of an electric signal from the air sensor 126, and to control the driving of the high voltage generator 60 and the air fan 70 in response to application of an electric signal from the air sensor 126.

The first air conditioning housing 153 has, when viewed from the bottom of the air conditioning housing 160, a higher height than the second to fifth air conditioning housings 155, 156, 157, and 159 at a position on an upper side of the air conditioning housing 160, and includes a fixed housing cover 142 surrounding the air filtering wall wire mesh of the second air inlet 152 for allowing the inside air of the building 220 to be drawn therethrough, at the position on the upper side of the air conditioning housing 160.

The air filtering wall wire mesh of the second air inlet 152 is hinged to the fixed housing cover 142 through a hinge means 146 and is locked to a partition wall of the first air conditioning housing 153 through a locking means 148. Each of the second to fifth air conditioning housings 155, 156, 157, and 159 includes a openable housing cover 144 individually hinged to a partition wall of the first air conditioning housing 153 through a of hinge means 146 at a position on the upper side of the air conditioning housing 160.

The openable housing cover 144 is covered on each of the second to fifth air conditioning housings 155, 156, 157, and 159 through a locking mean 148 by being locked thereto at a position opposite to the first air conditioning housing 153. The fourth air conditioning housing 157 is configured such that replacement of the plurality of air purifiers 110 is allowed through the openable housing cover 144.

FIGS. 9 to 11 are schematic views illustrating a driving mechanism of the air-conditioning and air-cleaning equipment illustrated in FIG. 1.

Referring to FIGS. 9 to 11, the air-conditioning and air-cleaning equipment 170 is prepared in the interior 215 of the building 220 as illustrated in FIGS. 1 to 8. Subsequently, the first air inlet 151 and the air outlets 158 of the air-conditioning and air-cleaning device 170 are respectively connected to the outside air inlet pipe193 (illustrated in FIG. 9) or 203 (illustrated in FIG. 10) and the air outlet pipes 196 and 199 (illustrated in FIG. 9) or 206 and 209 (illustrated in FIG. 10) installed in the interior of the 215 of the building 220.

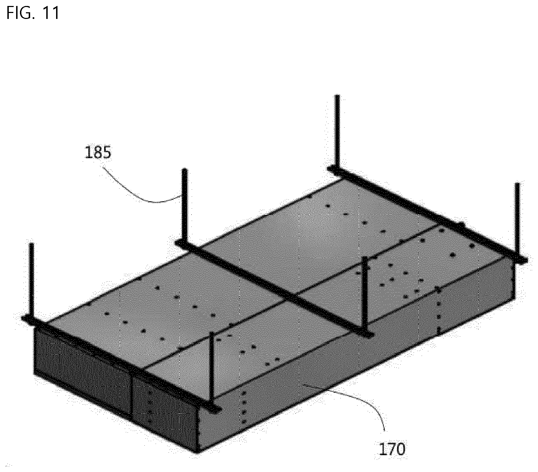

Here, when the air-conditioning and air-cleaning equipment 170 is installed on the ceiling in the interior 215 of the building 220 as illustrated in FIG. 9, the air-conditioning and air-cleaning equipment 170 may be turned upside down from the state illustrated in FIG. 1 to that illustrated in FIG. 11 so that a lower side of the air conditioning housing 160 faces the ceiling and may then be suspended from the ceiling through bolts 185 (illustrated in FIG. 11).

Unlike this, when the air-conditioning type and air-cleaning equipment 170 is installed in the vicinity of walls in the interior 215 of the building 220 as illustrated in FIG. 10, the air-conditioning type and air-cleaning equipment 170 may be erected from the state illustrated in FIG. 1 so that the first air inlet 151 and the air outlets 158 of the air conditioning housing 160 face the ceiling and may then be lean against the walls of the building 220.

Thereafter, the air-conditioning and air-cleaning equipment 170 is put into operation. In operation of the air-conditioning and air-cleaning equipment 170, the air conditioning housing 160 draws in the outside and inside air of the building 220 through the suction fan of the third air conditioning housing 156 so that the first air conditioning housing 153 and the second air conditioning housing 155 are filled with the mixed air.

Thereafter, the controller 134 of the air conditioning housing 160 receives electric signals from the temperature sensor 123 and the air sensor 126. Here, the temperature sensor 123 measures a temperature difference between the inside air and the mixed air and transmits a measured value to the controller 134. The air sensor 126 measures the temperature, humidity, bacteria, and odors of the interior 215 of the building 220 and transmits individual measured values to the controller 134.

The controller 134 drives the heater of the first air conditioning housing 153 on the basis of the measured value of the temperature sensor 123, and drives the air flow opening/closing unit 129 of the third air conditioning housing 156 and the high voltage generator 60 and the air fan 70 of each of the air purifiers 110 of the fourth air conditioning housing 157 on the basis of the measured values of the air sensor 126.

Here, the air flow opening/closing unit 129 opens and closes the air flow path between the second air conditioning housing 155 and the third air conditioning housing 156 through the solenoid valve, and transfers a part of the mixed air from the second air conditioning housing 155 to the fourth air conditioning housing 157 through the suction fan. The controller 134 is electrically connected to each of the air purifiers 110 illustrated in FIG. 2 or 3 through an electric wire 100 (illustrated in FIG. 4).

In addition, the controller 134 drives the suction fan and the air fan in a plurality of steps on the basis of the measured values of the air sensor 126. Meanwhile, the air conditioning housing 160 generates the clean air from the dispersed partial mixed air by means of the plurality of air purifiers 110. The air conditioning housing 160 transfers the clean air to the fifth air conditioning housing 159 by means of the air fan 70 of each of the air purifiers 110.

The clean air is then passed through the air outlets 158 of the fifth air conditioning housing 159 and finally expelled into rooms partitioned in the interior 215 of the building 220 via the air outlet pipes 196 and 199 (illustrated in FIG. 9) or 206 and 209 (illustrated in FIG. 10).

Although the exemplary embodiments of the present invention have been described for illustrative purposes, those skilled in the art will appreciate that various modifications, additions and substitutions are possible, without departing from the scope and spirit of the invention as disclosed in the accompanying claims.

## Claims

1. Air-conditioning and air-cleaning equipment installed in an interior of a building and configured to purify inside air of the building, the air-conditioning and air-cleaning equipment comprising:
a first air conditioning housing configured to draw in outside air and the inside air of the building to form mixed air;
a second air conditioning housing positioned in the vicinity of a first end of the first air conditioning housing and configured to receive the mixed air from the first air conditioning housing and to stagnate the mixed air in the second air conditioning housing;
a third air conditioning housing configured to receive a part of the mixed air from the second air conditioning housing;
a fourth air conditioning housing configured to receive partial mixed air from the third air conditioning housing and to purify the partial mixed air to form clean air; and
a fifth air conditioning housing positioned in the vicinity of a second end of the first air conditioning housing and configured to receive the clean air from the fourth air conditioning housing and to expel the clean air into the interior of the building,
wherein the first to the fifth air conditioning housings are in contact with each other through partition walls to define one air conditioning housing, and
the fourth air conditioning housing ionizes pollutants in the partial mixed air by means of electricity and collects the pollutants by means of the electricity.

2. The air-conditioning and air-cleaning equipment of claim 1, wherein the first air conditioning housing draws in the outside air from an outside air inlet pipe exposed to outside of the building by connecting a first air inlet of the first air conditioning housing to the outside air inlet pipe, and draws in the inside air from a second air inlet of the first air conditioning housing exposed to the interior of the building,
wherein the first air inlet of the first air conditioning housing is configured as a tube protruding from a first wall of the first air conditioning housing, and
the second air inlet of the first air conditioning housing is covered with an air filtering wall wire mesh positioned on a second wall of the first air conditioning housing.

3. The air-conditioning and air-cleaning equipment of claim 1, wherein the first air conditioning housing draws in the outside air from outside of the building and the inside air from the interior of the building to form the mixed air consisting of the outside air and the inside air,
measures an air temperature of the mixed air and an inner temperature of the building through a temperature sensor positioned at the first air conditioning housing, and
adjusts the air temperature of the mixed air to the inner temperature of the building through a heater positioned at the first air conditioning housing.

4. The air-conditioning and air-cleaning equipment of claim 1, wherein the second air conditioning housing communicates with the first air conditioning housing through an air flow guide hole positioned on a partition wall where the first air conditioning housing and the second air conditioning housing face each other,
receives the mixed air from the first air conditioning housing and confines the mixed air inside the second air conditioning housing, and
measures temperature, humidity, bacteria, and odors of the interior of the building through an air sensor positioned on a partition wall of the second air conditioning housing.

5. The air-conditioning and air-cleaning equipment of claim 1, wherein the third air conditioning housing intermittently communicates with the second air conditioning housing through an air flow opening/closing unit positioned on a partition wall where the second air conditioning housing and the third air conditioning housing face each other, and
in response to electric signals for temperature, humidity, bacteria and odors of the interior of the building from the air sensor of the second air conditioning housing, the air flow unit opens an air flow path to allow the part of the mixed air to flow or closes the air flow path to maintain airtightness with respect to the second air conditioning housing; and
the air flow opening/closing unit comprises:
a solenoid valve opening and closing the air flow path in response to an electric signal from the air sensor; and
a suction fan electrically connected to the solenoid valve.

6. The air-conditioning and air-cleaning equipment of claim 1, wherein the fourth air conditioning housing comprises:
a plurality of air purifiers facing the air flow opening/closing unit of the third air conditioning housing,
wherein each of the air purifiers is configured such that a pre-filter, an air pollutant collector, a high voltage generator, an air fan, and a post filter arranged in aligned relation in a direction from the third air conditioning housing toward the fifth air conditioning housing are included in a protective casing, and
the plurality of air purifiers disperse the partial mixed air from the air flow opening/closing unit to form the clean air.

7. The air-conditioning and air-cleaning equipment of claim 6, wherein the pre-filter comprises an air filtering container wire mesh configured to filter out pollutants passed through an air filtering wall wire mesh of the first air conditioning housing, and
the air filtering container wire mesh has a smaller mesh size than the air filtering wall wire mesh.

8. The air-conditioning and air-cleaning equipment of claim 6, wherein the air pollutant collector is electrically connected to the high voltage generator, and comprises:
a discharger electrically charged with negative (-) charges upon application of electric power from the high voltage generator; and
a dust collector electrically charged with positive (+) charges upon application of electric power from the high voltage generator,
wherein the discharger electrically charges pollutants contained in the dispersed partial mixed air with negative charges while burning the pollutants with arc flashes by bringing the arc flashes into contact with the pollutants and scatters the pollutants around the discharger, and
the dust collector draws pollutants charged with negative charges from the dispersed partial mixed air by means of an electrostatic attraction force.

9. The air-conditioning and air-cleaning equipment of claim 8, wherein the discharger comprises:
a cylindrical insulation tube having a spiral groove formed on an outer circumferential surface thereof; and
a toothed conductive strip positioned along the spiral groove of the insulation tube and having a plurality of teeth protruding from the outer circumferential surface of the insulation tube,
wherein the toothed conductive strip is electrically charged with the negative (-) charges upon application of electric power from the high voltage generator.

10. The air-conditioning and air-cleaning equipment of claim 9, wherein the insulation tube of the discharger has a uniform diameter,
turns of the toothed conductive strip are, when viewed from the outer circumferential surface of the insulation tube, formed in a uniform size on the insulation tube, and
on the spiral groove of the insulation tube, the neighboring turns of the toothed conductive strip have teeth arranged in directly opposed relationship or teeth arranged in diagonally opposed relationship.

11. The air-conditioning and air-cleaning equipment of claim 8, wherein the dust collector comprises:
first to third dust collectors positioned under the toothed conductive strip of the discharger and sequentially increasing in diameter to have concentric circles around the insulation tube; and
a fourth dust collector surrounding the toothed conductive strip and the insulation tube of the discharger, and the first to third dust collectors,
wherein the first to fourth dust collectors are electrically charged with the positive (+) charges upon application of electric power from the high voltage generator.

12. The air-conditioning and air-cleaning equipment of claim 6, wherein the high voltage generator is electrically connected to the air pollutant collector and applies a voltage to prevent generation of ozone from the dispersed partial mixed air to the air pollutant collector.

13. The air-conditioning and air-cleaning equipment of claim 6, wherein in operation of the air fan, the air fan guides the dispersed partial mixed air flowing into the pre-filter in a direction from the pre-filter to the post filter, and
the post filter comprises active carbon configured to filter out pollutants passed through the air pollutant collector from the dispersed partial mixed air.

14. The air-conditioning and air-cleaning equipment of claim 1, wherein the fifth air conditioning housing comprises a plurality of air outlets formed on a partition wall of the fifth air conditioning housing in the same number as the plurality of air purifiers positioned in the fourth air conditioning housing, and expels the clean air into the interior of the building through the air outlets and through air outlet pipes positioned in the interior of the building by connecting the air outlets to the air outlet pipes.

15. The air-conditioning and air-cleaning equipment of claim 1, wherein the fifth air conditioning housing comprises a controller electrically connected to the temperature sensor of the first air conditioning housing, the air sensor of the second air conditioning housing, the air flow opening/closing unit of the third air conditioning housing, and the high voltage generator and the air fan of the fourth air conditioning housing,
wherein the controller is configured to control, under application of an external power source, driving of the heater in the first air conditioning housing in response to application of an electric signal from the temperature sensor,
to control the driving of the solenoid valve and the suction fan of the air flow opening/closing unit in response to application of an electric signal from the air sensor, and
to control the driving of the high voltage generator and the air fan in response to application of an electric signal from the air sensor.
